Europäisches Patentamt

European Patent Office

Office européen des brevets

(11) Veröffentlichungsnummer: **0 174 354**
**B1**

(12) **EUROPÄISCHE PATENTSCHRIFT**

(45) Veröffentlichungstag der Patentschrift: **09.01.91**

(51) Int. Cl.⁵: **F 16 K 11/07, F 16 K 3/26**

(21) Anmeldenummer: **85901413.6**

(22) Anmeldetag: **01.03.85**

(86) Internationale Anmeldenummer:
**PCT/EP85/00074**

(87) Internationale Veröffentlichungsnummer:
**WO 85/03992 12.09.85 Gazette 85/20**

(54) **WEGEVENTIL.**

(30) Priorität: **01.03.84 DE 3407653**
**14.11.84 DE 3441650**

(43) Veröffentlichungstag der Anmeldung:
**19.03.86 Patentblatt 86/12**

(45) Bekanntmachung des Hinweises auf die
Patenterteilung:
**09.01.91 Patentblatt 91/02**

(84) Benannte Vertragsstaaten:
**DE FR GB**

(56) Entgegenhaltungen:
**DE-A-2 944 706**
**US-A-1 385 019**
**US-A-2 556 308**
**US-A-2 910 050**
**US-A-3 132 869**
**US-A-3 667 504**

**Prospekt der Firmen BUSAK + LUYKEN,
Stuttgart (DE), Juli 1980, Seite 2**

(73) Patentinhaber: **Mannesmann Rexroth GmbH
Postfach 340 Jahnstrasse 3 - 5
D-8770 Lohr/Main (DE)**

(72) Erfinder: **AMRHEIN, Reinhard
Wiesenfurt 7
D-8773 Frammersbach (DE)**
Erfinder: **HEID, Walter
Pfalzbrunnenstr. 27
D-8771 Neustadt (DE)**
Erfinder: **MUSCHONG, Günter
Luxemburger Strasse
D-8700 Würzburg (DE)**

(74) Vertreter: **Wagner, Karl H. et al
WAGNER & GEYER Patentanwälte
Gewürzmühlstrasse 5 Postfach 246
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf ein als Kolbenventil ausgebildetes Wegeventil zur Verbindung eines Verbrauchers mit einer Druckmittelquelle oder Tank, wobei der Steuerkolben mit einer Gehäusebüchse in Wirkverbindung steht, die gemeinsam mit dem Gehäuse Steuerräume begrenzt, die über den Steuerkolben und Radialbohrungen der Gehäusebüchse zu verbinden oder zu trennen sind und zumindest die Radialbohrungen des einen Steuerraums als Steuerbohrungen ausgebildet sind, die mit einer Steuerkante des Steuerkolbens zusammenwirken und der Steuerkolben hinter dieser Steuerkante in einer umlaufenden Nut eine elastische Ringdichtung aufweist, die mit der Führungsbohrung der Gehäusebüchse für den Steuerkolben zusammenwirkt.

Mit einem derartigen Wegeventil werden bekanntlich Start-Stop-sowie Schließrichtung eines Druckmediums gesteuert, beispielsweise um die Bewegungsrichtung eines Verbrauchers zu bestimmen. Während Wegesitzventile prinzipiell den Vorteil der leckölfreien Absperrung haben, ist bei Schieberventilen auf Grund des erforderlich Passungsspiels zwischen Kolben und Gehäuse in der Praxis eine leckölfreie Absperrung bislang nicht zu erreichen.

Es sind bereits zahlreiche Bauartgen von Wegeventilen bekannt, und es sei nur beispielsweise auf die US-Patents 583 822, 1 385 019, 2 469 921, 2 556 308, 2 910 050 und 3 667 504 hingewiesen. Ferner seien die deutsche Offenlegungsschriften 21 57 347, 28 08 447 und 3 03 76 74 genannt.

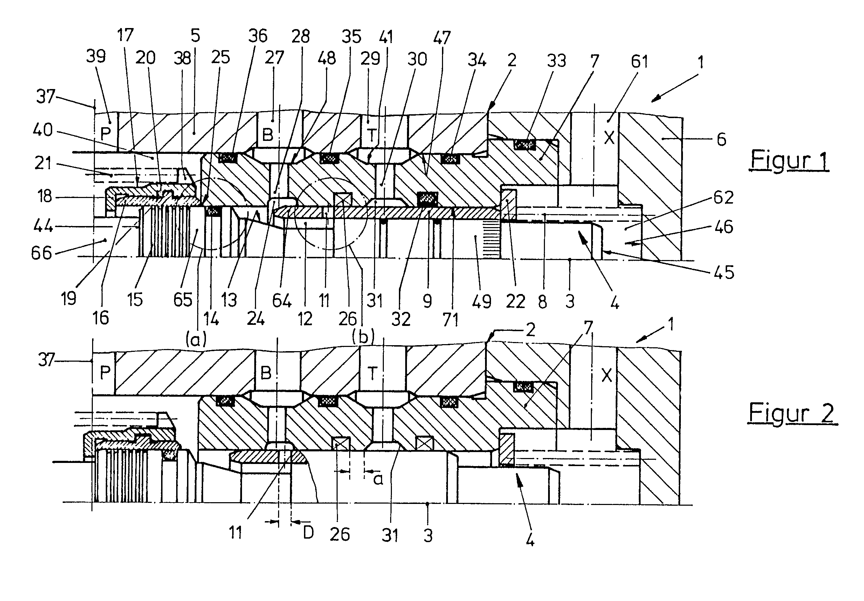

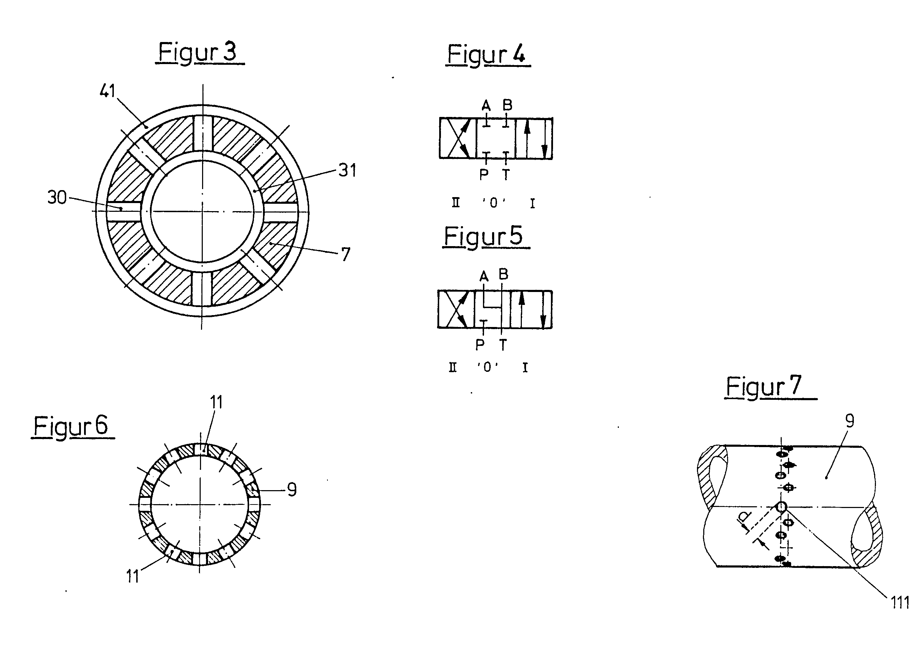

Merkmale des Oberbegriffs sind insbesondere aus der US—A—2 910 050 bekannt, in welcher mehrere Ausführungsbeispiele dargestellt sind. Beim Ausführungsbeispiel gemäß Fig. 1 tritt Strömungsmittel durch einen Einlaß ein und fließt über eine Kammer und Ventilöffnungsmittel zu einem Durchlaß, von wo aus das Strömungsmittel über eine Reihe von kleinen Ventilöffnungsmitteln austreten kann. Da die Breite eines Stützrings an der Stelle, wo wer zum Ventilglied hinweist, wesentlich kleiner ist als die kombinierte Breite von zwei Reihen der Ventilöffnungsmittel, ergibt sich eine Zeitspanne während der Bewegung des Ventigliedes, wo Strömungsmittel durch die erste Reihe der Ventilöffnungsmittel zur Auslaßöffnung fließen kann, während gleichzeitig die zweite Reihe der Ventilöffnungsmittel sich noch im Bereich des Dichtungsrings befindet. Der Strömungsmittelfluß erzeugt dann eine auf die Dichtung wirkende Kraft mit der Tendenz, diese aus ihrer zugehörigen Ausnehmung herauszuziehen. Die gleiche Situation ergibt sich auch für das in den Fig. 2 bis 4 gezeigte Ausführungsbeispiel, wo wiederum zwei Reihen kleiner Ventilöffnungsmittel zur Zusammenarbeit mit einem Stützring vorgesehen sind. Beim Ausfuhrungsbeispiel gemäß Fig. 4 wird ein Vierwegeventil realisiert, welches zwei Sätze kleiner Öffnungen besitzt, welche an U-förmigen Dichtgliedern verlaufen müssen, um zum Druckausgleich beizutragen. Damit ist offenbar gemein, daß eine gleichmäßige Druckverteilung im Umfangsrichtung an der Dichtung auftreten soll, so daß hier die Erkenntnis abgeht, daß ein Strömungsmittelfluß längs einer Dichtung die Tendenz hat, diese aus ihrer zugehörigen Ausnehmung herauszuziehen. Aus der US—A—3 667 504 ist ein Wegeventil bekannt, welches durch im Gehäuse angeordnete Dichtungen eine Leckfreiheit anstrebt. Die im Gehäuse angeordneten Dichtungen sitzen in Nuten, die von weiteren Nuten umgeben sind, wobei aber in bestimmten Schaltstellungen des Ventils diese Dichtungen voll der Strömung des Druckmediums ausgesetzt sind.

Der Erfindung liegt die Augabe zugrunde, ein Wegeventil der im Oberbegriff des Anspruchs 1 genannten Art leckagefrei derart auszubilden, deaß vie verwendeten Dichtungen geschützt werden, so daß diese über lange Betriebszeiträume hinweg einwandfrei arbeiten.

Zur Lösung dieser Aufgabe sieht die Erfindung die im kennzeichnenden Teil des Anspruchs 1 genannten Maßnahmen vor. Bevorzugte Ausgestaltungen der Erfindung ergeben sich aus den Unteransprüchen.

Es sei bemerkt, daß die gemäß der Erfindung vorgesehenen Ventile außer für Öl ebenfalls insbesondere für hochwasserhaltige Flüssigkeiten und reines Wasser verwendet werden können.

Weitere Vorteile, Ziele und Einzelheiten der Erfindung ergeben sich aus der Beschreibung von Ausführungsbeispielen anhand der Zeichnung; in der Zeichnung zeigt:

Fig. 1 einen Längsschnitt durch ein 4/3-Wegeventil in seiner "O"- oder Neutralstellung, wobei allerdings nur ein Viertel des gesamten Schnitts und ein Teil der erfindungsgemäßen Dichtmittel dargestellt sind;

Fig. 2 einen Schnitt wie Fig. 1, wobei sich hier das 4/3-Wegeventil in seiner einen Arbeitsstellung befindet, die in Fig. 4 mit "II" bezeichnet ist;

Fig. 3 einen Querschnitt im Bereich des Tankanschlusses der Fig. 1 durch eine Büchse, die zur Aufnahme des Kolbenschiebers dient;

Fig. 4 das Bildzeichen eines Wegeventils, welches mit dem Ausführungsbeispiel gemäß den Fig. 1 und 2 realisiert wird;

Fig. 5 das Bildzeichen eines Wegeventils, welches mit dem Ausführungsbeispiel gemäß den Fig. 3 und 4 realisiert wird wenn zusätzliche Bohrungen vorgesehen sind;

Fig. 6 einen Querschnitt durch eine den Steuerkolben umgebende Hülse, und zwar im Bereich von deren Radialbohrungen;

Fig. 7 eine andere Ausbildungsart der in Fig. 6 gezeigten Radialbohrungen;

Fig. 8 eine weiteres Ausführungsbeispiel eines Wegeventils, nämlich eine 3/2-Wegeventil, mit einem Teil der erfindungsgemäßen Dichtmittel;

Fig. 9 eine weiteres Ausführungsbeispiel eines Wegeventils mit einem weiteren Teil der erfindungsgemäßen Dichtmittel;

Fig. 10 die Einzelheit "X" des Wegeventils gemäß Fig. 9;

Fig. 11 das Bildzeichen eines 3/3-Wegeventils, welches mit der Ausführung gemäß Fig. 9 realisierbar ist wenn Radialbohrungen 510 nicht vorhanden;

Fig. 12 das Bildzeichen eines 3/2-Wegeventils, welches mit der Ausführung gemäß Fig. 9 (bei Vorhandensein der Radialbohrungen 510) realisierbar ist.

Fig. 13 das Bildzeichen eines 3/2-Wegeventils, welches mit der Ausführung gemäß Fig. 8 realisierbar ist;

Fig. 14 und 15 Bildzeichen zweier 4/3-Wegeventile, welche bei spiegelbildlicher Anordnung eines zweiten Verbrauchers und zweiten Tanks gemäß der Erfindung realisierbar sind;

Fig. 16 das Bildzeichen eines 3/2-Wegeventils, welches gemäß der Erfindung realisierbar ist, wenn die Bohrungen 110 verwendet werden (und zwar bei spiegelbildlicher Anordnung eines zweiten Verbrauchers u. zweiten Tanks);

Fig. 17 einen Längsschnitt durch ein Logikventil;

Fig. 18 das Symbol des Logikventils gemäß Fig. 17.

In den Fig. 1 und 2 ist eine erstes Ausführungsbeispiel mit einem Teil der gemäß der Erfindung vorgesehenen Dichtmittel dargestellt. Das erste Ausführungsbeispiel ist ein 4/3-Wegeventil, welches die Funktionen des Bildzeichens gemäß Fig. 4 realisiert.

Fig. 1 zeigt das 4/3-Wegeventils 1 in seiner in Fig. 4 mit "O" bezeichneten Neutralstellung. Um den gesamten Schnitt zu erhalten, muß man sich Fig. 1 an der Mittellinie 3 und sodann nochmals an der Symmetrielinie 37 gespiegelt vorstellen. Fig. 2 zeigt die eine Arbeitsstellung des Wegeventils 1, wobei man sich zur Vervollständigung des Schnittes wiederum die Fig. 2 an der Mittellinie 3 gespiegelt vorstellen muß und ferner auch an der Symmetrielinie 37, letzteres allerdings mit der Einschränkung, daß die Spiegelung nicht für den noch im einzelnen zu beschreibenden Steuerkolben 4 (und Elemente 22, 16 und 17) gilt, da sich gemäß Fig. 2 der Steuerkolben 4 nicht in seiner Neutralstellung befindet, sondern in seiner einen Arbeitsstellung. Diese Arbeitsstellung ist im Bildzeichen gemäß Fig. 4 mit "II" bezeichnet, d.h. der noch näher zu erläuternde Pumpenanschlußraum 40 steht mit dem einen Verbraucher B in Verbindung, während der andere Verbraucher A an den Tank T angeschlossen ist.

Die im Bildzeichen gemäß Fig. 4 mit "I" bezeichnete Arbeitsstellung ist nicht schnittbildlich dargestellt. Diese Arbeitsstellung wäre dann gegeben, wenn der Steuerkolben 4 — vgl. Fig. 1 — mit seinem rechten Kopfende 45 an einer Anlagefläche 46 eines Deckelteils 6 anliegen würde.

Nach dieser einleitenden Bemerkung sei insbesondere unter Bezugnahme auf die Fig. 1 und 2 das 4/3-Wegeventils 1 beschrieben. Das 4/3-Wegeventil 1 weist ein Ventilgehäuse 2 auf, in dem längs der Mittellinie 3 der bereits erwähnte Steuerkolben (Kolbenschieber) 4 hin- und herbeweglich gelagert ist. Das Ventilgehäuse 2 ist von insgesamt kreiszylindrischer oder quaderförmiger Gestalt und weist ein Hauptgehäuseteil 5 auf, in dessen Mittelbohrung 47 ein Büchse 7 abgedichtet sitzt. Ein bereits erwähntes Deckelteil 6 umgreift das eine Ende der Büchse 7 und ist in nicht dargestellter Weise an Hauptgehäuseteil 5 befestigt. Wie sich aus der Einleitung ergibt, ist natürlich symmetrisch zum gezeigten Dekkelteil 6 ein nicht gezeigter Deckelteil diametral dazu vorgesehen. Zur Abdichtung zwischen dem Hauptgehäuseteil 5 und der Büchse 7 sind Dichtungen 34, 35 und 36 vorgesehen. Eine Dichtung 33 sieht eine Abdichtung zwischen dem Deckelteil 6 und der Büchse 7 vor. Natürlich ist auch zur dargestellten Büchse 7 eine zweite nicht gezeigte Büchse spiegelbildlich zur Symmetrielinie 37 vorgesehen ist.

Im Bereich der Symmetrielinie 37 verläuft durch das Hauptgehäuseteil 5 eine Pumpenanschlußbohrung 39, die in den bereits erwähnten Pumpenanschlußraum 40 mündet, der seinerseits durch Hauptgehäuseteil 5 die beiden Büchsen 7 und den noch näher zu beschreibenden Steuerkolben 4 begrenzt wird.

Ferner verläuft durch das Hauptgehäuseteil 5 eine Verbraucheranschlußbohrung 27 (für den Verbraucher B), die in eine Ringausnehmung 48 der Büchse 7 mündet. Die Ringausnehmung 48 steht ihrerseits über mehrere radial verlaufende Verbindungsbohrungen 28 mit einem Verbraucheranschlußraum 24 in der Form einer Ringnut an der Innenoberfläche der Büchse 7 in Verbindung.

In ähnlicher Weise verläuft noch eine Tankanschlußbohrung 29 radial durch den Hauptgehäuseteil 5 hindurch und mündet an einer Ringausnehmung 41 am Außenumfang der Büchse 7. Die Ringausnehmung 41 ihrerseits steht wiederum über mehrere radial verlaufende Verbindungsbohrungen 30 — vgl. dazu auch Fig. 5 — mit einem Tankanschlußraum 31 in Verbindung, der die Form einer sich in Axialrichtung des Ventils 1 verbreiternden Ringausnehmung besitzt. Mit der Tankanschlußbohrung 29 steht der Tank T in Verbindung.

Schließlich verläuft eine Radialbohrung 61 durch das Deckelteil 6 und steht an ihrem inneren Ende mit einen Kolbenkopfraum 62 in Verbindung, der von Deckelteil 6, Büchse 7 und Kolben 4 begrenzt wird. Im Kolbenkopfraum 62 sitzt ferner eine den Kolben 4 umgebende bei 8 angedeutete Schraubendruckfeder, die sich in der in Fig. 1 gezeigten Ruhestellung über einen Federteller (Zentrierscheibe) 22 an Büchse 7 und Kolben 4 einerseits und an Anlagefläche 46 des Deckels andererseits abstützt. Es ist klar, daß sich eine entsprechende Feder auch am engegengesetzt liegenden — nicht gezeigten — Ende des Kolbens 4 befindet. Mit X ist ein Steueranschluß bezeichnet.

Zu beiden Seiten der Ringausnehmung 31 sind in Ringnuten der Büchse 7 Dichtungen 26 bzw. 32 untergebracht. Zwischen der die Dichtung 26 aufnehmenden Ringnut und der Ringausnehmung 36 — vgl. Fig. 2 — bildet die Büches 7 einen Ringsteg mit der Axiallänge "a". In den Ausführungsbeispielen gemäß Fig. 1 und 2 ist "a" größer als der Durchmesser von noch zu beschreibenden Bohrungen 11 des Kolbens 4 (Vgl. Fig. 2).

Innerhalb einer in Längsrichtung der beiden Büchsen 7 verlaufenden Mittelbohrung 71 ist der bereits erwähnte Kolben 4 hin- und herbeweglich gelagert. Man muß sich natürlich den Kolben 4 wiederum nach unten wie auch nach links symmetrisch ergänzt vorstellen. Der Kolben 4 weist ein Stangenteil 49 sowie zwei daran befestigte Strom-oder Druckleitelementeg in der Form von Hülsen 9 auf. Die Hülsen 9 sind beispielsweise am Stangenteil 49 durch Hartlöten befestigt. Die Hülse 9 besitzt mehrere Radialbohrungen 11, was insbesondere in Fig. 6 veranschaulicht ist. Die Bohrungen 11 und ein Innenende 64 der Hülse 9 erstrecken sich teilweise über eine ringförmige Ausnehmung 12, 13 im Stangenteil 49. Diese Ausnehmung kann in eine erste Ausnehmung 12 und eine zweite daran anschließende Ausnehmung 13 unterteilt werden. Vorzugsweise hat die erste Ausnehmung 12 eine waagerechte Grundfläche, und die zweite zum Innenumfang der Büchse 7 hin offene Ausnehmung 13 hat eine schräge Grundfläche. Es ist auch denkbar, daß, anders als dargestellt, der aus Hülsen 9 und Stangenteil 49 gebildete Kolben 4 aus einem Stück ausgebildet ist, aus dem die erforderlichen Ausnehmungen 12, 13 herausgearbeitet sind.

Benachbart zur Ausnehmung 12, 13 in Richtung zur Symmetrielinie 37 hin befindet sich in einer Ringnut eine Dichtung 14 in der Form eines O-Rings. Diese Dichtung 14 dichtet den Pumpenanschlußraum 40 gegenüber der Ausnehmung 12, 13 ab. In der in Fig. 1 gezeigten Neutralstellung des Kolbens 4 sitzt die Dichtung 14 benachbart zu einer von Büchse 7 gebildeten Steuerkante 25.

Anschließend an die Dichtung 14 bildet der Stangenteil 49 einen Lagerabschnitt 65, an den sich wiederum nach innen fortgesetzt eine einen kleineren Durchmesser aufweisender Verbindungsabschnitt 66 anschließt. Im Lagerabschnitt 65 sind mit 15 bezeichnete Entlastungsrillen in an sich bekannter Weise ausgebildet.

Auf dem Lagerabschnitt 65 sitzt mit gering bemessenem Spiel eine Hülse 16, die in etwa mittig einen radial nach außen ragenden Bund 19 aufweist. Auf dem Außenumfang der Hülse 16 sitzt ein in Axialrichtung zweigeteilter Federteller 17, der mit einer Ringnut 20 den Bund 19 umfaßt. Ferner umgreift ein radial verlaufender Teil 18 das innenliegende Ende der Hülse 16. Am äußeren Ende des geteilten Federtellers 17 ist ein Radialbund 38 vorgesehen, an dem eine den Federteller 17 umfassende und diesen zusammenhaltende Schraubendruckfeder 21 mit einem Ende anliegt, während das andere Ende der Schraubendruckfeder 21 am nicht gezeigten diametral entgegengesetzt liegenden Bund 38 des ebenfalls nicht gezeigten zweiten Federtellers anliegt. Die Schraubendruckfeder 21 drückt die beiden Hülsen 16 mit ihren Anlageflächen 67 gegen entsprechende Anlageflächen 43 der Büchsen 7. Die Anlagefläche 67 besitzt eine schräg nach innen verlaufende Abschrägung 42.

Biem dargestellten Wegeventil 1 gibt es von der Strömung und vom Druck der gesehen zwei kritische Dichtungselemente, und zwar handelt es sich einmal um die Dichtung 14 und zum anderen um die Dichtung 26. In Fig. 1 sind diese beiden kritischen Dichtungszonen eingekreist und mit (a) und (b) bezeichnet. Wie dargestellt werden beide Dichtungssysteme (a) und (b) in einem Gerät, vorzugsweise einem Wegeventil verwendet. Durch die Verwendung der beiden Dichtsysteme wird ein sicheres leckagefreies Arbeiten des Ventils 1 erreicht. Die eingesetzten Dichtungen werden während des Schaltvorgangs beim Überfahren von Steuerkanten oder Steuerbohrungen unter Druck nicht beschädigt.

Zunächst sie auf das Dichtungssystem (a) eingegangen. Der Übergang von der Schaltstellung gemäß Fig. 1 in die Schaltstellung gemäß Fig. 2 bedeutet in der Bilddarstellung gemäß Fig. 4 den Übergang von "O" auf "II". Wenn man also den mit der Pumpe P in Verbindung stehenden Pumpenanschlußraum 40 mit dem Verbraucheranschlußraum 24 des Verbrauchers B verbinden möchte, so muß der Kolben 4 in Fig. 1 nach links verschoben werden. Bei der anfänglichen Linksverschiebung des Kolbens 4 wird zunächst die Dichtung 14 vollständig unter die Hülse 16 gefahren, bis schließlich der am Lagerabschnitt 65 ausgebildete Kolbenansatz 44 gegen das radial verlaufende Teile 18 des Federtellers 17 stößt und diesen zusammen mit der Hülse 16 entgegen der Kraft der Feder 21 nach links so weit mitnimmt, bis das nicht gezeigte linke Kopfende des Kolbens 4 an der entsprechenden Anlagefläche 46 zur Anlage kommt. Zu Beginn der Linksbewegung wurde die Hülse 16 mit ihrer Anlagefläche 67 sowohl durch die Feder 21 als auch mittels des Strömungsmitteldrucks in Pumpenanschlußraum 40 gegen die Anlagefläche 43 der Büchse 7 gedrückt. Dadurch, daß der in Fig. 1 links gelegene Kolbenansatz 44 erst dann am radial verlaufenden Teil 18 anschlägt, wenn die Dichtung 14 sich schon ganz unter der Hülse 16 befindet, wird die Dichtung 14 nicht dem Strömungsdruck des — vgl. fig. 2 — von Pumpenanschlußraum 40 zur Ausnehmung 12, 13 fließßenden Druckmittels unmittelbar ausgesetzt.

Est ist nicht nur möglich, die Pumpe P mit dem Verbraucher B zu verbinden und den Verbraucher B in Null-Lage mit dem Tank T in Verbindung zu bringen, sondern durch die Verwendung des Dichtungssystems (b) ist es auch möglich, in der anderen Richtung zu schalten und so beispielsweise das erfindungsgemäße 4/3-Wegeventil zu realisieren.

Das Dichtungssystem (b) tritt in Funktion, wenn aus der Schaltstellung gemäß Fig. 1 in die in Fig. 4 mit "I" gezeigte Schaltstellung umgeschaltet wird. Zu diesem Zweck muß in Fig. der Steuerkolben 4 so weit nach rechts bewegt werden, bis er mit seinem Kopfende 45 an Anschlagfläche 46 zur Anlage kommt. Bei dieser Bewegung wird die gezeigte Feder 8 zusammengedrückt und die in Fig. 1 nicht gezeigte, aber symmetrisch vorhandene Anordnung aus Hülse 16 und geteiltem Federteller 17 wird vom ebenfalls nicht gezeigten Kolbenansatz 44 ein Stück weit mitgenommen.

Wichtig ist, daß bei der Rechtsbewegung des Kolbens 4 der vom Verbraucher B kommende Druck von innen nach außen gegen die Dichtung 26 geleitet wird, und zwar geschieht dies über die Radialbohrungen 11, so daß die Dichtung 26 radial weggedrückt wird. Dabei ist wichtig, daß der Druck vom Verbraucheranschlußraum 24 herkommt und dannn von innen her gegen die Dichtung 26 geleitet wird. Würde der Druck über den Tankanschlußraum 31 zur Ausnehmung 12, 13 geleitet werden, so würde die Dichtung 26 mit Sicherheit zerstört werden, weil der Druck die Dichtung in die Bohrungen 11 hineindrücken würde.

Obwohl die Erfindung hier anhand eines 4/3-Wegeventils beschrieben wurde, so ist sinngemäß die Erfindung doch auch bei anderen Ventilarten anwendbar, insbesondere auch bei einem 4/2- 3/3- und auch 3/2- und auch 3/2-Wegeventil. Allgemein kann man sagen, daß es durch die Anwendung der beiden erwähnten Dichtungsprinzipien (a) und (b) möglich ist, nahezu beliebige Kolben-Ventilausbildungen zu schaffen, bei denen die kritischen Dichtungen nur einem geringen oder keinem Abrieb ausgesetzt sind.

Auf die Beschreibung der Fig. 3—6 wurde bereits im Rahmen der Beschreibung der beiden Ausführungsbespiele gemäß den Fig. 1 und 2 eingegangen.

Fig. 7 zeigt eine andere Ausbildung für die in der Hülse 9 vorgesehenen Löcher oder Radialbohrungen 111.

Im Rahmen des Ausführungsbeispiels gemäß den Fig. 1 und 2 können die Radialbohrungen 11 durch die in Fig. 7 gezeigten Radialbohrungen 111 ersetzt sein. Die Radialbohrungen 111 besitzen einen Durchmesser "d", der kleiner ist als der Durchmesser "D" Radialbohrungen 11. Die Radialbohrungen 111 sind in zwei axial gegeneinander versetzten Umfangsreihen angeordnet, so daß sich insgesamt eine in etwa zickzackförmige Anordnung ergibt. Dadurch wird die Festigkeit der Hülse 9 in geringstmöglichem Umfang beeinträchtigt.

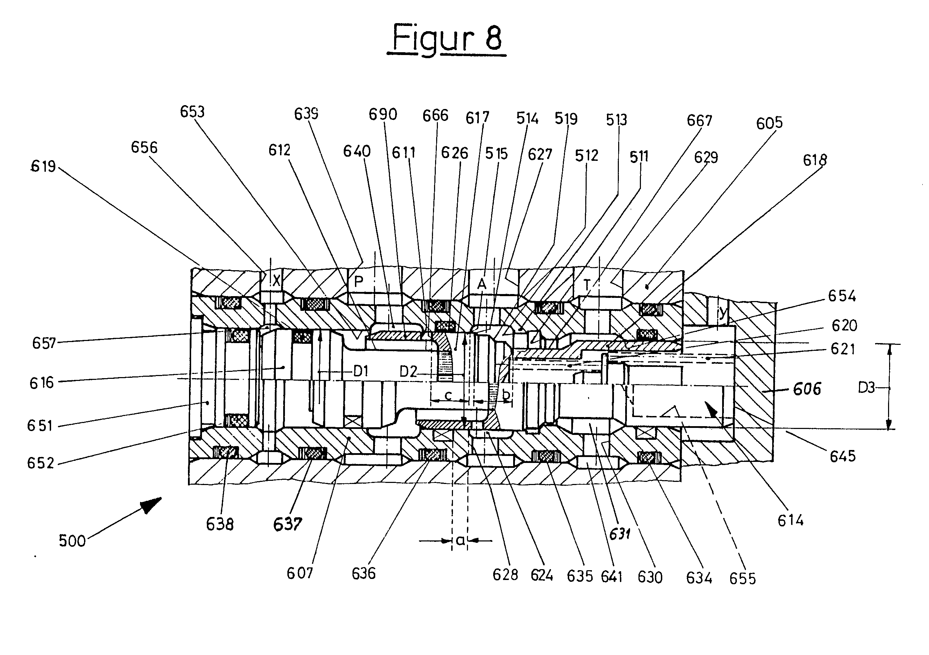

Im folgenden werden Ausführungsbeispiele der erfindungsgemäßen Wege-Schieberventile anhand der Fig. 8—16—25 beschrieben, und zwar solche mit einem Längsschieber (Kolben). Sinngemäß können die erfindungsgemäßen Prinzipien auch für Ventile mit Drehschieber Verwendung finden. Wege-Schieberventile, auf die sich die Erfindung vorzugsweise bezieht, weisen typischerweise in einem Gehäuse eine Längsbohrung auf, die durch Ringkanäle unterbrochen ist. Dadurch ergeben sich im Gehäuse Steuerkanten, wobei in der Längsbohrung ein beweglicher Steuerkolben angeordnet ist, der bei Verschiebung die Ringkanäle im Gehäuse miteinander verbindet und voneinander trennt.

Die Abdichtung der einzelnen Ringkanäle zueinander wird normalerweise über das Passungsspiel zwischen Steuerkolben und Gehäuse erreicht, wobei im Vergleich zu den Sitzventilen eine hermetische Abdichtung nicht möglich ist. Die vorliegende Erfindung richtet sich speziell auf eine neuartige verbesserte Abdichtung, der einzelnen Ringkanäle zueinander.

Gemäß einem Vorschlag der Erfindung sind Steuerbohrungen radial im Gehäuse verlaufend einen oder meherer Anschlüse mit der Längsbohrung des Ventilgehäuses verbindend vorgesehen. Eine Dichtung im Kolben dient zur Abdichtung dieser Steuerbohrungen und kann an diesen vorbeibewegt werden.

Nach dieser einleitenden Bemerkung sei nunmehr auf Ausführungsbeispiele im einzelnen eingegangen, wobei soweit als möglich die gleichen Bezugszeichen für die gleichen Bauteile verwendet wurden.

Ein weiteres Ausführungsbeispiel eines Wegeventils 500 sei nunmehr an Hand der Fig. 8 beschrieben. Ähnlich wie bei den vorhergehenden Wegeventilen weist das Wegeventil 500 ein Hauptgehäuseteile 605 mit einer Längsbohrung auf, in die eine Büchse 607 eingesetzt ist. Die Büchse 607 ist gegenüber dem Gehäuse 605 durch Dichtungen 634—638 abgedichtet. Im Bereich einer Längsbohrung 653, 654 der Büchse 607 sind Anschlußkanäle oder Anschlußräume für die verschiedenen nicht gezeigten Anschlüsse für Pumpe P, Verbraucher A und Tank T vorgesehen. Vergleiche dazu den Pumpenringkanal (Pumpenanschlußraum) 640, den Verbraucherringkanal (Verbraucheranschlußraum) 624 und den Tankanschlußraum (Tankringkanal) 631. Der Pumpenringkanal 640 steht über eine Pumpenanschlußbohrung 639 mit dem nicht gezeigten Pumpenanschluß P in Verbindung. Der Verbraucherringkanal 624 steht über mehrere Verbindungsbohrungen 628 mit einer Ringausnehmung in der Büchse 607 in Verbindung, und ferner über eine Verbraucheranschlußbohrung 627 mit dem eigentlichen Verbraucheranschluß A. Schließlich steht der Tankringkanal 631 über mehrere Verbindungsbohrungen 630 mit einer Ringausnehmung 641 in der Büchse 607 in Verbindung. Die Ringausnehmung 641 steht ihrerseits über eine Tankanschlußbohrung 629 mit dem eigentlichen Tankanschluß T in Verbindung. Mit 612 ist noch eine ringförmige Ausnehmung bezeichnet und mit D1, D2 und D3 sind unterschiedliche Durchmesser des Steuerkolbens 614 bezeichnet.

Die Längsbohrung 653, 654 wird in ihrer gesamten Länge durch die Büchse 607 gelbildet, und umfaßt zwei Teile, und zwar den Längsbohrungsteil 653, der einen etwas größeren Innendurchmesser besitzt, als dies für den zweiten Längsbohrungsteil 654 gilt. Die Längsbohrung 653, 654 ist an einem Ende durch einen mit einer Dichtung 652 versehenen Stopfen 651 abgeschlossen, während am anderen Ende ein Deckelteil 606 vorgesehen ist. In einem Axialhohlraum 655 des hier mit 614 bezeichneten Kolbens sind zwei Druckfedern 620, 621 hintereinander geschaltet, die am Deckelteil 606 anliegen und eine Verschiebung des Steuerkolbens 614 gestatten. Der Kolben 614 kann beispielsweise dadurch verschoben werden, daß man einen Steuerdruck X über Bohrung 656 anlegt, die mit einem Ringkanal 657 in Verbindung steht, der seinerseits am Kopfteil 616 endet. Hier ist praktisch nur eine Bewegung des Steuerkolben 614 nach rechts möglich. Der nicht bezeichnete Deckelteil weist eine der Bohrung 661 entsprechende Öffnung für den Steuerdruck Y auf.

Der Kolben 614 weist drei nebeneinander liegende Abschnitte auf, und zwar den bereits erwähnten Kopfteil 616, einen Mittelteil 617 und einen weiteren Kopfteil 618. Der Kopfteil 616 besitzt einen Durchmesser D1 von beispielsweise 18,4 mm, während der Durchmesser D3 des Kopfteils 618 beispielsweise 16 mm beträgt. Der Mittelteil schließlich besitzt einen Durchmesser D2, der beispielweise 18 mm beträgt und etwas kleiner ist als der Durchmesser D1. Im Kopfteil 616 ist die Dichtung 619 untergebracht.

Auch dieses Wegeventil verwendet zwei Dichtsysteme, und zwar eine erstes Dichtsystem unter Verwendung eines Strom- oder Druckleitelements 690 und ein zweites Dichsystem, welches eine Kolbensitzfläche 519 sowie eine Gehäusesitzfläche 511 benutzt.

Man erkennt, daß der Verbraucherringkanal 624 zwei Steuerkanten 512, 515 definiert. Der Kolben 614 bildet benachbart zur Kolbensitzfläche 519 eine Steuerkante 514 aus, die mit der Steuerkante 512 zusammenarbeitet.

Die Radialöffnungen 611 bilden ebenfalls Steuerkanten 666, die mit der Steuerkante 515 zusammenwirken können.

In der im oberen Teil der Fig. 8 gezeigten Ausgangsschaltstellung ist der Abstand der Steuerkanten 656 gegenüber der Steuerkante 515 mit c bezeichnet; der Abstand der Steuerkante 514 gegenüber der Steuerkante 512 ist mit b bezeichnet. Mit a ist schließlich der Abstand der Steuerkante 515 gegenüber der am nächsten gelegenen Kante der Dichtung 626 bezeichnet. Zwischen dem Mittelteil 617 und dem Kopfteil 618 ist eine Ausnehmung 667 im Kolben 614 ausgebildet. Im dargestellten Ausführungsbeispiel ist die Steuerkante 514 an der das Druckleitelement 690 bildenden Hülse ausgebildet. Ferner ist im dargestellten Ausführungsbeispiel b gleich c, d.h. es liegt der Fall der Neutral- oder Nullüberdeckung vor.

Der Steuerkolben 614 wirkt vor dem Aufsetzen seiner Sitzfläche 519 auf die Gehäusesitzfläche 511 mit einem die Steuerkante 512 aufweisenden Gehäusesteg 513 zusammen, wobei bezogen auf die Ausgangsschaltstellung der Abstand b der Steuerkante 512 des Gehäusestegs 513 zur entsprechenden Steuerkante 514 des Steuerkolbens 614 eine solche Größe zum Abstand c zwischen der gegenüberliegenden Steuerkante 515 am Gehäuse und den Steueröffnungen 611 des Druckmittelleitelements 609 aufweist, daß je nach der Größe der Abstände zueinander auch einer Über-, Neutral- oder Unterdekkung vorliegt.

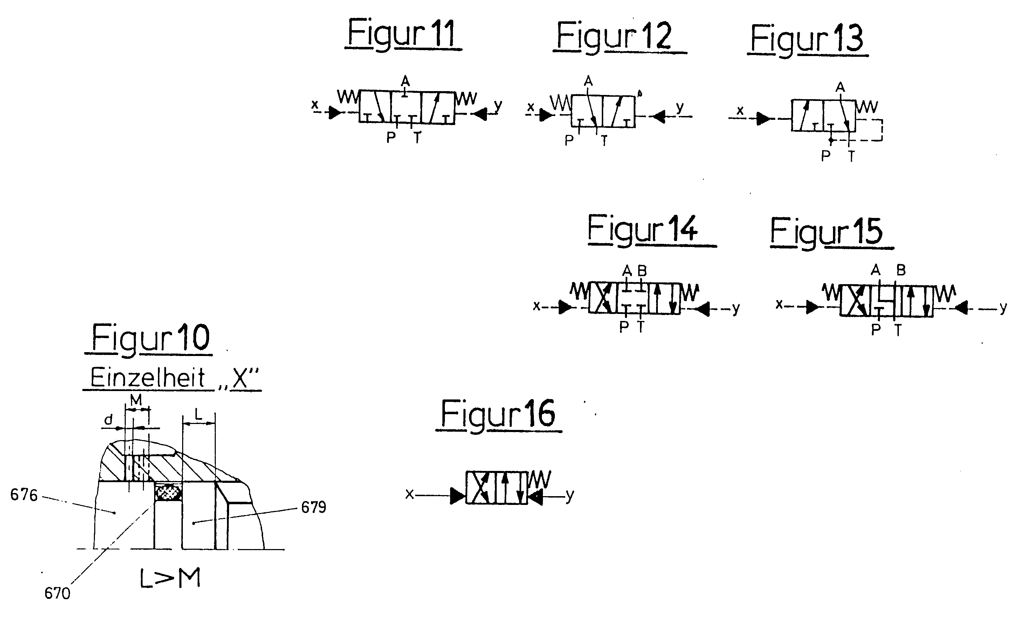

Mit der Ausbildungsform gemäß Fig. 8 kann beispielsweise das 3/2-Wegeventil gemäß dem Bildzeichen in Fig. 13 realisiert werden. In der in der oberen Hälfte der Fig. 8 gezeigten Neutraloder Ausgangsschaltstellung ist die Pumpe P blockiert und der Verbraucher A steht mit dem Tank T in Verbindung. Wird der Kolben 614 in Fig. 8 nach rechts verschoben, so treten die Steuerkanten 512, 514 in Wechselwirkung und die Pumpe P wird über die Radialbohrungen 611 mit dem Verbraucher A verbunden. Wie sich aus der unteren Hälfte der Fig. 15 ergibt dichten die Kolbensitzfläche 519 die Gehäusesitzfläche 511 den Verbraucher A gegenüber dem Tank T ab.

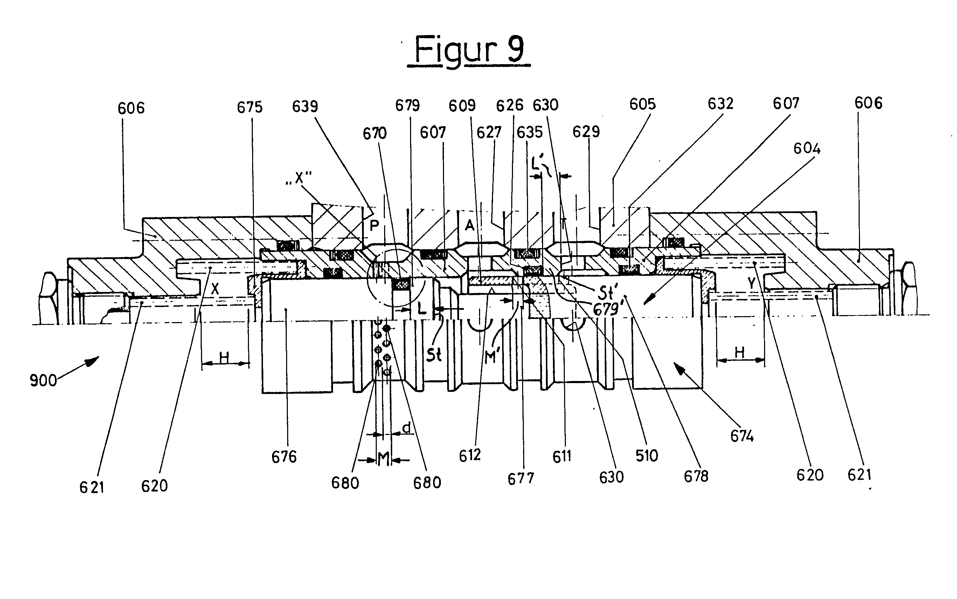

Fig. 9 zeigt ein Wegeventil 900, welches wiederum zwei unterschiedliche Dichtungssysteme verwendet. Das Wegeventil 900 hat in der Büchse 607 ausgebildet eine Reihe von umfangsmäßig verteilten Radialborhungen 680. Vorzugsweise sind zwei gegenüber einander versetzte, mit Axialabstand angeordnete Reihen solcher Radialbohrungen 680 vorhanden. Die Radialbohrungen 680 befinden sich in dem Bereich der Büchse 607 wobei den anderen bereits beschriebenen Ausführungsbeispielen sich der Pumpenanschluß-Ringkanal befindet. Die Axialerstreckung der Radial -oder Axialbohrungen 680 ist mit M bezeichnet.

Der Kolben 604 weist einen Kopfteil 676, einen Mittelteil 677 und einen weiteren Kopfteil 678 auf. Im Kopfteile 676 ist eine Dichtung 670 benachbart zu einem eine Steuerkante St bildenden Ringsteg 679 im Kolben untergebracht. Der Ringsteg 679 hat eine Länge in Axialrichtung (Axialerstreckung) des Kolbens von L. Die Radialbohrungen bzw. Steuerbohrungen 680 bilden zusammen mit der Dichtung 670 das eine Dichtungssystem. Das andere Dichtungssystem wird gebildet durch das Druckleitelement 609, die Steuer -oder Radialbohrungen 611 sowie die Dichtung 626. Die Steuerbohrungen wirken mit einer Steuerkante St' der Gehäusebüchse 607 zusammen. Zwischen der die Dichtung 626 aufnehmendem Nut und der Steuerkante St' verbleibt eine Steg 679' der eine Axialerstreckung (L') aufweist, die größer ist als die Axialerstreckung (M') der Steuerbohrungen im hülsenförmigen Bereich des Steuerkolbens. Der Kolben 604 ist beiderseits durch Druckfedern 620, 621 federbelastet und kann aus der in Fig. 9 gezeigten Stellung heraus in die eine oder in die andere Richtung verschoben werden. Die obere Hälfte der Fig. 9 zeigt einen Schritt durch das Ventil 900.

Die untere Hälfte der Fig. 9 ist eine Draufsicht auf die Innenoberfläche der Büchse 607. Der Hub des Kolbens 604 ist mit H bezeichnet. Die bereits erwähnten Druckfedern 620, 621 stützen sich einerseits an einem Federteller 675 und andererseits am jeweiligen Deckel 605 ab.

Erfindungsgemäß ist die Länge L des Stegs 679 größer als der Abstand M der äußeren Begrenzung der Steuerbohrung 680; dieser Abstand M wird auch Bohrungsbereichsbreite genennt.

Mit dem Ventil 900 gemäß Fig. 9 können verschiedene Ventilfunktionen erreicht, werden. So wird beispielsweise das 3/3-Wegeventil gemäß Fig. 11 realisiert, wenn bei der Konstruktion gemäß Fig. 9 die Bohrungen 510 nicht vorhanden sind. Ein Verschieben des Kolbens 604 aus der in Fig. 9 gezeigten Ruhestellung (wo Verbraucheranschluß A, Pumpenanschluß P und Tankanschluß T blockiert sind) heraus nach links verbindet Pumpe P über die Bohrungen 680, Ausnehmung 612 und Radialbohrungen 611 mit dem Verbraucher A, wobei gleichzeitig der Tank T gesperrt verbleibt. Bei Bewegung des Steuerkolbens 604 nach links wird eine Beschädigung der Dichtung 670 durch die Bohrungen 680 vermieden, die einen verhältnissmässig kleinen Durchmesser verglichen mit der Breite der Dichtung besitzen. Bewegt man den Kolben 604 aus der Ruhestellung heraus nach rechts, so bleibt die Pumpe gesperrt, der Verbraucher A wird über Ausnehmung 612 und die Radialbohrungen 611 mit dem Tank T verbunden.

Wenn beim Ventil 900 gemäß Fig. 11 anstelle der Radialbohrungen 611 die Radialbohrungen 510 vorgesehen sind, so wird ein 3/2-Wegeventil gemäß dem in Fig. 12 gezeigten Bildzeichen realisiert, wobei der Steuerkolben 604 sinnvollerweise nur in die linke Schaltstellung verschoben wird, Ein Verschieben des Kolbens 604 nach rechts wird bei dieser Ausführung verhindert, indem Kolben 604 und Deckel so ausgebildet sind, daß in der Ausgangsstellung (Verbindung A zu T) das rechte Ende des Kolbens 604 am Deckel anliegt.

Das Wegeventil 900 besitzt jeweils drei Nutzanschlüsse und verschiedene Schaltstellungen.

Es wird darauf hingewiesen, daß die vorliegende Erfindung mit Vorzug auch bei Wegeventilen Anwendung finden kann, die vier Nutzanschlüsse, 2 Verbraucher A, B und Pumpe P sowie Tank T aufweisen. Es ist demgemäß möglich, auch ein 4/3- bzw. ein 4/2-Wegeventil zu realisieren. Dies geschieht dadurch, daß man bei den beschriebenen Ausführungsbeispielen links vom P-Anschluß einen weiteren Verbraucheranschluß B und einen weiteren Tankanschluß T vorsieht. Auf diese Weise lassen sich die Ventile gemäß dem Bildzeichen in Fig. 14, 15 und 16 ohne weiteres durch den Fachmann realisieren.

Zusammenfassend sieht die Erfindung bei einem Wege-Schieberventil die gemeinsame Verwendung von zwei unterschliedlichen Dichtmitteln vor. Zum einen wird ein Druckleitelement am Kolben vorgesehen, um sicherzustellen, daß Druckmittel stets nur in Radialrichtung gegen eine im Gehäuse 607 befindliche Dichtung 626 strömen kann. Das zweite Dichtmittel kann unterschiedlicher Bauart sein. Eine Vielzahl von einen relativ kleinen Durchmesser d aufweisenden Steuerbohrungen 680 wird im Gehäuse im Bereich eines Anschlusses vorgesehen, wobei eine im Steuerkolben angeordnete Dichtung 670 zum Öffnen und Schließen dieser Bohrungen 680 Verwendung findet, ohne daß dabei eine Beschädigung der Dichtung 670 auftreten kann. Est ist auch möglich, dieses letztgenannte Dichtungsprinzip für sich alleine einzusetzen.

Vorzugsweise werden die Dichtmittel unter Verwendung eines Druckleitelements und einer Gehäusedichtung zwischen dem Verbraucheranschluß A und dem Tankanschluß P eingesetzt. Die zweiten Dichtungsmittel, d.h. die Dichtmittel unter Verwendung von Steuerbohrungen 680 und einer Dichtung 670 im Kolben, werden vorzugsweise zwischen Pumpe P und Anschluß A eingesetzt.

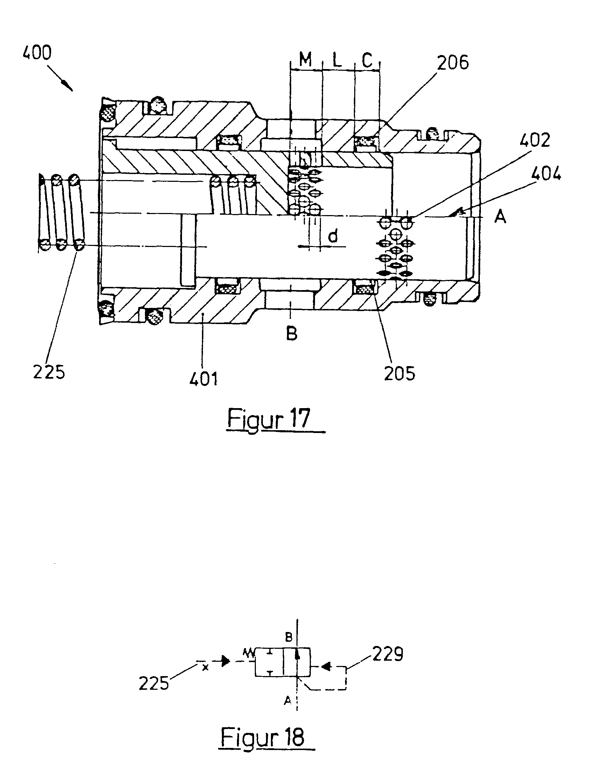

Die Fig. 17 und 18 betreffen ein Logikventil 400, welches zur Erläuterung der einen Art von Dicht mitteln herangezogen sei. Beim Logikventil 400 sind drei Ringe von gegeneinander versetzten Radialbohrungen 402 im Ventilkolben 404 ausgebildet. Fig. 17 zeigt besonders deutlich den O — Ring 206 und die flache und breite Ausbildung eines Turkonrings 205. Die Vetilhülse oder Büchse ist hier mit 401 und eine Feder ist mit 225 bezeichnet.

Die Darstellung gemäß Fig. 17 sei dazu verwendet, einige allgemeine Ausführungen hinsichtlich der Bohrungsbereichbreite M, der Stegbreite L und der Dichtungsbreite C zu machen.

In sämtlichen Ausführungsbeispielen soll der Durchmesser einer der Radialbohrungen 402 mit d bezeichnet sein, wie dies in Fig. 17 (und auch einer der früheren Fig. z.B. Fig. 10) dargestellt ist.

Zunächst ist festzustellen, daß der Durchmesser d der Bohrungen möglichst klein soll. Je kleiner der Durchmesser der Bohrungen, desto besser. Es muß jedoch ein Kompromiß hinsichtlich der Kosten getroffen werden. Wenn $d \leq C/2$ ist, so ergeben sich günstige Verhältnisse. Im Bohrungsbereich sollte der verbleibende tragende Anteil des Materials ungefähr 70% betragen, so daß die Bohrungen ungefähr 30% ausmachen.

Die Stegbreite L soll vorzugsweise größer als die Dichtungsbreite C sein.

In wievielen Ringen die Radialbohrungen 402 angeordnet sind, kann an sich frei gewählt werden. Die Ringe müssen allerdings nicht gleichmäßig mit der maximal möglichen Anzahl radialer Bohrungen 402 versehen sein. Vielmehr können die Ringe beispielsweise, um ein "welches" Schaltverhalten zu erzielten, mit einer entsprechend veränderlichen Anzahl von Bohrungen 402, ausgestattet werden. Der bei Logiksitzventilen zu diesem Zweck eingesetzte "Dampfungszapfen" wird dadurch überflüssig.

Allgemeinen soll die Stegbreite $L > nd$ sein, wobei $n = 1, 2, 3 \ldots$ Dabei ist "n" die Anzahl der axial versetzt angeordneten Bohrungsringe bezeichnet. Bespielsweise ist in Fig. 17 $n = 3$, während in Fig. 7 $n = 2$ ist.

Der Ansdruck "Turcon" ist ein Warenzeichen für eine Dichtung, die Polytetrafluorethylen (PTFE) als Basiswerkstoff enthält. Im Ventilgehäuse wird eine Turcon-Double-Delta-Seal und im Kolben ein Turcon-Glyd-Ring verwendet.

## Patentansprüche

1. Als Kolbenventil ausgebildetes Wegeventil (900) zur Verbindung eines Verbrauchers (A) mit einer Druckmittelquelle (P) oder einem Tank (T), wobei der Steuerkolben (604) mit einer Gehäusebüchse (607) in Wirkverbindung steht, die gemeinsam mit dem Gehäuse (605) Steuerräume begrenzt, die über den Steuerkolben und Radialbohrungen (680, 630) der Gehäusebüchse zu verbinden oder zu trennen sind und zumindest die Radialbohrungen (680) des einen Steuerraumes als Steuerbohrungen ausgebildet sind, die mit einer Steuerkante (St) des Steuerkolbens zusammenwirken und der Steuerkolben hinter dieser Steuerkante in einer umlaufenden Nut eine elastische Ringdichtung (670) aufweist, die mit der Führungsbohrung der Gehäusebüchse für den Steuerkolben zusammenwirkt, dadurch gekennzeichnet, daß der zwischen Steuerkante (St) und umlaufender Nut für die Ringdichtung (670) verbleibende Steg (679) eine Axialerstrekkung (L) aufweist, die größer ist als die Axialerstreckung (M) der Steuerbohrungen (680) in der Gehäusebüchse so daß die Ringdichtung (670) in keiner Stellung des Steuerkolbens (604) der Druckmittelströmung ausgesetzt ist, daß der Steuerkolben einen hülsenförmigen Bereich (609) (Druckleitelement) mit Steuerbohrungen (611) aufweist, die mit einer Steuerkante (St') der Gehäusehülse zusammenwirken und hinter dieser Steuerkante in einer umlaufenden Nut in der Gehäusebüchse eine elastische Ringdichtung (626) angeordnet ist und der zwischen dieser Steuerkante und umlaufender Nut verbleibende Steg (679') eine Axialerstrekkung (L') aufweist, die gröber ist als die Axialerstreckung (M') der Steuerbohrungen im hülsenförmigen Bereich des Steuerkolbens, so daß die Ringdichtung (626) in keiner Stellung des Steuerkolbens (604) der Druckmittelströmung ausgesetzt ist, und daß der hülsenförmige Bereich (609) über die Bohrungen (611) Druckmittel von innen nach außen im wesentlichen radial gerichtet auf die Dichtung (626) in der Gehäusebüchse (607) leitet.

2. Ventil nach Anspruch 1, dadurch gekennzeichnet, daß die Hülse (609) en einem Stangenteil des Steuerkolbens (604) befestigt ist.

3. Ventil nach Anspruch 1 oder 2, dadurch gekennzeichnet, daß die Hülse (609) mit einem Innende sowie einem Radialbohrungen (611) aufweisenden Bereich über einer Ausnehmung (612) im Kolben (604) liegt.

4. Ventil nach einem oder mehreren der vorhergehenden Ansprüche, dadurch gekennzeichnet, daß in dem hülsenförmigen Bereich (609) neben dem Satz von Radialbohrungen (611) ein weiterer Satz von Radialbohrungen (510) nach außen hin derart versetzt angeordnet ist, daß bei ebenfalls verlängerter Ausnehmung (612) im Stangenteil in Neutralstellung des Steuerkolbens (604) eine Verbindung von Verbraucheranschlußraum und Tankanschlußraum ereicht ist.

5. Ventil nach einem oder mehreren der vorhergehenden Ansprüche, dadurch gekennzeichnet, daß der Durchmesser "D" einer einzigen Reihe von Bohrungen (611) kleiner ist als die Axiallänge "a" eines Ringstegs gebildet zwischen einer eine Dichtung im Kolben oder Gehäuse aufnehmenden Nut und einer benachbarten Ringausnehmung.

6. Ventil nach einem oder mehreren der vorher

gehenden Ansprüche, dadurch gekennzeichnet, daß die Radialbohrungen (110) durch mehrere einen kleineren Durchmesser "d" besitzende Radialbohrungen (111) ersetzt sind.

7. Ventil nach einem oder mehreren der vorhergehenden Ansprüche, dadurch gekennzeichnet, daß die Radialbohrungen (111) in zwei axial gegeneinander versetzten Umfangsreihen insgesamt zick-zack-förmig angeordnet sind.

8. Ventil nach einem oder mehreren der vorhergehenden Ansprüche, dadurch gekennzeichnet, daß das Gehäuse im Bereich eines Ringkanals oder mehrerer Ringkanäle zwei Reihen Steuerbohrungen (680) aufweist, die die Verbindung zwischen der Längsbohrung des Ventils und der jeweiligen Anschlußbohrung (639) herstellen.

9. Ventil nach Anspruch 9, dadurch gekennzeichnet, daß eine Vielzahl von Steuerbohrungen umfangsmäßig verteilt angeordnet ist.

10. Ventil nach einem oder mehreren der vorhergehenden Ansprüche, dadurch gekennzeichnet, daß zwei Reihen von gegeneinander versetzt liegenden Steuerbohrungen vorgesehen sind.

11. Ventil nach einem oder mehreren der vorhergehenden Ansprüche, dadurch gekennzeichnet, daß sämtliche Steuerbohrungen (680) den gleichen Durchmesser (d) besitzen, wobei (L) größer (d) ist.

**Revendications**

1. Distributeur (900) réalisé en forme de valve à piston, destiné a relier un utilisateur (A) à une source de fluide sous pression (P) ou à un réservoir (T), dans lequel:

le piston de commande (604) coopère avec une douille de boîtier (607) qui limite, en commun avec le boîtier (605) des espaces de commande qui doivent étre reliés ou séparés grâce au piston de commande et à des alésages radiaux (680, 630) de la douille de boîtier,

au moins les alésages radiaux (680) de l'un des volumes de commande sont réalisés sous forme d'alésages de commande qui coopérant avec une arête de commande (St) du piston de commande,

le piston de commande porte, dans une rainure périphérique derrière cette arête de commande, un joint annulaire élastique qui coopère avec l'alésage de guidage du piston de commande qui est prévu dans la douille de boîtier,

caractérisé en ce que la nervure (679) restant entre l'arête de commande (St) et la rainure périphérique du joint annulaire (610) présente une extension axiale (L) qui est supérieure à l'extension axiale (M) des alésages de commande (680) de la douille de boîtier, de sorte que le joint annulaire (670) n'est exposé à l'écoulement de fluide sous pression dans aucune position du piston de commande, (604),

en ce que le piston de commande présente une zone en forme de douille (609) (élément d'amenée de pression) comportant des alésages de commande (611) qui coopèrent avec une arête de commande (St') de la douille de commande, un joint annulaire élastique (626) est disposé derrière

cette arête de commande dans un rainure périphérique de la douille de boîtier, et la nervure (679') restant entre cette arête de commande et l'encoche périphérique présente une extension axiale (L') qui est supérieure à l'extension axiale (M') des alésages de commande de la zone en forme de douille du piston de commande, de sorte que le joint annulaire (626) n'est exposé à l'écoulement de fluide sous pression dans aucune position du piston de commande (604),

et en ce que la zone en forme de douille (609) amène, par les alésages (611), du fluide sous pression depuis l'intérieur vers l'extérieur, selon une direction sensiblement radiale sur le joint (626) de la douille de boîtier (607).

2. Valve selon la revendication 1, caractérisée en ce que la douille (609) est fixée sur une partie de tige du piston de commande (604).

3. Valve selon la revendication 1 ou 2, caractérisée en ce que la douille (609) recouvre par une extrémité intérieure ainsi que par une zone présentant des alésages radiaux (611), un évidement (612) prévu dans le piston (604).

4. Valve selon l'une ou plusieurs des revendications précédentes, caractérisée en ce que, près du jeu d'alséges radiaux (611), un autre jeu d'alésages radiaux (510) décalé vers l'extérieur est disposé dans la zone (609) en forme de douille, de telle manière que, grâce à une prolongation correspondante de l'évidement (612) prévue dans la partie de tige, il se forme, dans la position neutre du piston de commande (604), une liaison entre l'espace de raccordement de l'utilisateur et l'espace de raccordement du réservoir.

5. Valve selon l'une ou plusieurs des revendications précédentes, caractérisée en ce que les diamètres "D" des alésages d'une rangée unique d'alésages (611) sont plus petits que la longueur axiale "a" d'une nervure annulaire constituée entre une gorge recevant un joint dans le piston ou le boîtier et un évidement annulaire voisin.

6. Valve selon l'une ou plusieurs des revendications précédentes, caractérisée en ce que les alésages radiaux (110) sont remplacés par des alésages radiaux (111) possèdant un diamètre plus petit "d'.

7. Valve selon l'une ou plusieurs des revendications précédentes, caractérisée en ce que les alésages radiaux (111) sont disposés en quinconce en deux rangées périphériques décalées axialement l'une par rapport à l'autre.

8. Valve selon l'une ou plusieurs des revendications précédentes, caractérisée en ce que le boîtier comporte, dans la zone d'un canal annulaire ou de plusieurs canaux annulaires, deux rangées d'alésage de commande (680) qui constituent la liaison entre l'alésage axial de la valve et l'alésage de raccord correspondant (639).

9. Valve selon la revendication 8, caractérisée en ce que plusieurs alésages de commande sont disposés en étant répartis sur la périphérie.

10. Valve selon l'une ou plusieurs des revendications précédentes, caractérisée en ce qu'il est prévu deux rangées d'alésages radiaux disposées décalées l'une par rapport à l'autre.

11. Valve selon l'une ou plusieurs des revendications précédentes, caractérisée en ce que tous les alésages de commande (680) possèdant le même diamètre "d", "L" étant supérieur à "d".

## Claims

1. Directional control valve (900) of the spool valve type for connecting a user (A) with a pressure source (P) or a tank (T), wherein the control spool (604) is operatively arranged with a housing sleeve (607) which boarders together with the housing (605) control chambers, said control chambers being adapted to be connected or separated via said control spool and radial boars (680, 630) of the housing sleeve, wherein at least the radial boars (680) of the one control chamber are designed as control boars, which cooperate with a control edge (St) of the control spool, and the control spool comprises behind said control edge a resilient annular seal (670) in a circumferential groove, said annular seal being adapted to cooperate with the guide board of the housing sleeve for the control spool characterized in that the land (679) remaining between the control edge (St) and the circumferential groove for the annular seal (670) comprises an axial distance (L) which is larger than the axial distance (M) of the control boar (680) in the housing sleeve, so that the annular seal (670) is, in no position of the control spool (604), subjected to the flow of pressure medium, that the control spoor comprises a sleeve like area (609) (pressure guide element) having control boars (611), said control boars (611) being adapted to cooperate with a control edge (St) of the housing sleeve, and behind said control edge an annular ring seal (626) is located in a circumferential groove of the housing sleeve and the land (679') remaining between said control edge and said circumferential groove comprises an axial dimension (L') which is larger than the axial dimension (M') of the control boars in the sleeve like area of the control spool, so that the annular seal (626) is, in no position of the control spool (604), subjected to the flow of the pressure medium, and that the sleeve like area (609) guides pressure medium from the inside towards the outside via said boars (611) substantially radially directed onto said seal (626) in said housing sleeve (607).

2. The valve of claim 1 characterized in that the sleeve (609) is mounted to a rod portion of the control spool (604).

3. The valve of claim 1 characterized in that the sleeve (609) is located above a recess (612) in said spool (604) with an inner end as well as with an area comprising radial boars (611).

4. The valve of one or more of the preceding claims characterized in that said sleeve-like area (609) another set of radial boars (510) is provided outwardly offset with regard to said set of radial boars (611) such that for an also extended recess (612) in the rod portion a connection of the user port to the tank port is obtained in the neutral position of the control spool (604).

5. The valve of one or more of the preceding claims characterized in that the diameter "D" of a single row of boars (611) is smaller than the axial length "a" of an annular land formed between a groove receiving a seal in the spool or the housing and an adjacent annular recess.

6. The valve of one or more of the preceding claims characterized in that the radial boars (110) are replaced by a plurality of radial boars (111) having a smaller diameter "d".

7. The valve of one or more of the preceding claims characterized in that the radial boars (111) are arranged in two axially offset circumferential rows in a generally zick-zack shaped arrangement.

8. The valve of one or more of the preceding claims characterized in that the housing comprises in the area of a ring channel or of a plurality of ring channels two rows of control boars (680), which provide connections between the longitudinal boar of the valve and the respective port boar (639).

9. The valve of claim 8 characterized in that a plurality of control boars is distributed in a circumferential manner.

10. The valve of one or more of the preceding claims characterized in that two rows of control boars are provided which are offset with respect to each other.

11. The valve of one or more of the preceding claims characterized in that said all control boars (680) have the same diameter (d), with (L) being larger than (d).

Figur 1

Figur 2

## Figur 3

41

30

31

7

## Figur 4

A  B

P  T

II  'O'  I

## Figur 5

A  B

P  T

II  'O'  I

## Figur 6

11

9

11

## Figur 7

9

d

111

# Figur 8

EP 0 174 354 B1

Figur 9

EP 0 174 354 B1

Figur11

Figur12

Figur13

Figur14

Figur15

Figur16

Figur10
Einzelheit „X"
L>M

Figur 17

Figur 18